# EUROPEAN PATENT APPLICATION

(11) **EP 4 098 103 A1**
(43) Date of publication of application: **07.12.2022**
(21) Application number: 22176846.8
(22) Date of filing: 01.06.2022
(51) Int. Cl.: A01G 9/029, A01G 9/04, A01G 24/28, A01G 27/02, A01G 31/02

(54) **SYSTEM FOR GROWING PLANTS**

(30) Priority: 02.06.2021 NL 2028371
(71) Applicant: Hans Veldman Beheer B.V., 1019 RA Amsterdam (NL)
(72) Inventor: Veldman, Johannes Cornelis Andreas, 1019 RA Amsterdam (NL)
(74) Representative: Arnold & Siedsma

(57) **Abstract**

The herein disclosed invention related to a system for growing plants, comprising: a plant pot comprising a capillary growth medium and a side wall having perforations; and a holder, comprising: an accommodation configured to receive the plant pot; and a nozzle arranged at or near a lower end of the accommodation and configured to moisturise a lower section of the plant pot, so that water or moisture is allowed to disperse towards higher sections of said plant pot by means of a capillary action of the capillary growth medium comprised by the plant pot.

## Description

The present disclosure relates to a system for growing plants.

Such systems for growing plants are commonly used when more traditional agricultural methods involving growing plants in a field are considered inefficient and/or impractical, for example due to space limitations or a requirement of carefully controlling an environment in which plants are grown. Exemplary applications of such systems include vertical farming involving growing plants in vertically stacked layers for commercial purposes, and non-commercial domestic applications in the home of a user.

While systems for growing plants of the aforementioned type do offer a number of distinct advantages, they are nevertheless associated with a number of distinct disadvantages relative to more traditional agricultural methods.

One of these disadvantages is the relatively high costs of building and maintaining these systems. In large scale commercial settings, these costs can be partially diminished over time through economy of scale and/or by automating certain agricultural procedures (e.g. watering or applying fertiliser) by means of the system itself. However, in practice achieving such long term cost advantages does entail yet further increased startup costs, which places such systems outside of the reach of many small scale commercial and consumer applications.

Another disadvantage of systems of the aforementioned type is their increased degree of technical complexity. Typically, such systems for growing plants comprise an artificial light source connected to an external electricity source and watering means connected to an external water source. Depending on the context in which a system for growing plants is used, it is often difficult to facilitate these requirements for installing and operating the system. For example, in particular in a domestic setting it is in practice difficult to connect the system to water and electricity mains in a manner that is both practical and esthetically pleasing.

In particular for domestic applications it is generally desirable to install the system at a location that is enclosed and therefore hidden from view. For example, when the system is used for growing herbs or salads used for cooking, the system may be installed inside a kitchen cabinet or kitchen drawer. While such enclosed installation locations are considered esthetically pleasing, it will increase humidity within the system and thus the formation of mold and mildew due to decreased ventilation. Moreover, many kitchen cabinets comprise a drawer that is configured to be displaced along with its contents when opened. A system for growing plants contained therein, along with any parts thereof and a water reservoir with water in it, will thus likewise be displaced. In practice, this has been found to often result leaking or splashing of water.

KR 101 954 251, which is acknowledged to constitute the closest prior-art, discloses an Internet of Things-based smart plant cultivation device. Said device comprises a liquid injection unit having a plurality of injection tubes located underneath one or more plant that is accommodated by the Internet of Things-based smart plant cultivation device. These injection tubes inject water into soil in which said plant is growing, to thereby water the plant.

EP 1 955 586 A is acknowledged as further prior-art.

The objective of the present invention is to provide a system for growing plants through which at least some of the above stated, or further, disadvantages of known comparable systems for growing plants are mitigated or abated.

This objective is achieved with a system for growing plants, comprising: a plant pot comprising a capillary growth medium and a side wall having perforations; and a holder comprising: an accommodation configured to receive the plant pot and a nozzle arranged at or near a lower end of the accommodation and configured to moisturise a lower section of the plant pot, so that water or moisture is allowed to disperse towards higher sections of said plant pot by means of a capillary action of the capillary growth medium comprised by the plant pot.

The perforated wall of the plant pot in conjunction with the capillary growth medium contained therein and the arrangement of the nozzle ensure an optimal distribution of moisture within the plant pot. In particular, because water ejected through the nozzle dissipates towards the roots of the plant by means of the capillarity growth medium, the amount of water required for watering the plant is minimised and an accumulation of excess water within the plant pot is largely prevented. As such, water consumption for watering the plant and possible mold growth is significantly reduced. Moreover, the reduced presence of excess water within the plant pot prevents water being splashed, sloshed and consequently spilled when a plant pot is displaced, which is considered highly advantageous in certain embodiments of the present invention.

In addition to the above, a small amount of excess water that is nevertheless present in the plant pot is easily dissipated through evaporation by means of the perforated wall of the plant pot. The perforated plant pot moreover advantageously aerates the roots of the plant contained within the plant pot, thereby supplying oxygen to said roots to be absorbed by the plant.

In contrast to the Internet of Things-based smart plant cultivation device known from KR 101 954 251, the system for growing plants according to the invention does not inject (i.e. introduce under pressure) water into growth medium (e.g. soil) in which a plant is growing. Instead, the system for growing plants according to the present invention waters plants by means of a two-part operation between on the one hand a capillary growth medium comprised by a plant pot also comprising a plant, and on the other hand a nozzle arranged and configured to moisturize a lower section of said plant pot. With this system, water introduced on or into the lower section of the plant pot by means of said nozzle is distributed throughout the rest of the plant pot, where it may reach the plant's roots, by means of a capillary action of the capillary growth medium contained therein.

In a preferred embodiment of the present invention, the holder comprises one or more than one further accommodation configured to receive one or more than one further plant pot. In these embodiments a multitude of plants can be grown in the system

In a further preferred embodiment of the present invention, the accommodation comprises an accommodation wall extending around at least part of a circumference of the lower section of the plant pot. In these embodiments, excess water present in the lower section of the plant pot is contained when the plant pot is displaced, for example when the system is installed in a (kitchen) cabinet comprising drawer that is opened to inspect or harvest the plants.

In a further preferred embodiment of the present invention, at least some of the perforations of the plant pot are arranged above the accommodation wall of the accommodation to allow for improved evaporation of excess water and aeration of plant roots.

In a further preferred embodiment of the present invention, each accommodation wall extending around at least part of a circumference of the lower section of the plant pot comprises at least one recess. In more preferred embodiments, said recess is oriented towards an accommodation of an adjacent plant pot. In these embodiments of the system for growing plants, aeration channels are formed to advantageously achieve an optimal airflow for evaporation of excess water and aeration of plant roots.

In a further preferred embodiment of the present invention, the capillary growth medium is an acidic growth medium. An acidic growth medium lowers the pH value of water (moisture) contained in the plant pot, which is beneficial for plant growth, especially where there is (tap) water with a high pH value. These embodiments of the present invention are particularly advantageous when plants that require increased acidity are grown in the system and/or when plants are watered with water that has high mineral content.

In a further preferred embodiment of the present invention, the acidic growth medium comprises peat moss. Peat moss is a low cost material with a small environmental impact that is easily obtainable on the market, which is moreover suitable to achieve a desired decreased pH value of the water.

In accordance with certain preferred embodiments of the present invention, a drip tray may be provided that is configured to collect any excess water dissipated from the plant pot.

In a further preferred embodiment of the present invention, the system for growing plants further comprises a fluid container fluidly connected to the nozzle. The water supply may be a water reservoir that is comprised by the system and that may be periodically refilled. In these embodiments, it is thus not required to connect the system to a mains water supply by means of one or more hoses, which greatly simplifies installation of the system in particular in a domestic setting. Moreover, the water reservoir may be a closed reservoir that can be displaced without risk of water splashing out of the reservoir. Such a reservoir may allow the system to operate over an extended amount of time without requiring any further maintenance from a user that may interrupt optimal plant growing conditions provided by the system.

In more preferred embodiments, the fluid container may comprises at least one wave breaker.

In a further preferred embodiment of the present invention, the system is configured to periodically moisturise the lower section of the plant pot, preferably for one minute per hour. The frequency at which the lower section of the plant pot is moisturised may, in particular, be selected in accordance with a water requirement of the plants and/or a rate at which excess water is dissipated by means of perforations in the wall of the plant pot.

In a further preferred embodiment of the present invention, wherein the system is an indoor system for growing plants, the system is preferably dimensioned to fit into a kitchen cabinet or kitchen drawer.

The various aspects and features described and shown in the specification can be applied, individually, wherever possible. These individual aspects, and in particular the aspects and features described in the attached dependent claims, may be an invention in its own right that is related to a different problem relative to the prior art, and that may be made subject of a future divisional patent application. It is conceivable that the invention that is subject of such a divisional patent application does not require all the features of the system of growing plants according to claim 1 of the present invention. In particular the capillary growth medium may not necessarily have to be part of the system if the combination of plant pot and holder already define features that distinguish the invention from the prior art. It is believed that in particular dependent claims 4 or 5 may distinguish the system relative to the prior art, even without the capillary growth e

The above stated objective is moreover achieved through a holder, as well as a plant pot, of or for a system according to any one of the above described embodiments of the present invention.

In the following description preferred embodiments of the present invention are further elucidated with reference to the drawing, in which:
figure 1 shows a cross-sectional side view of an embodiment of a system in accordance with the present invention according to the present invention, the system being in an installed state;
figure 2 shows a frontal cross-sectioned view of the system in accordance with the embodiment of figure 1;
figure 3 shows a holder comprised by a system in accordance with the present invention in a top-down perspective;
figure 4 shows a frontal view of the holder of figure 3;
figure 5 shows a perspective view of the holder of figures 3 and 4; and
figure 6A and 6B depict an embodiment of a water supply comprised by the system of the foregoing figures.

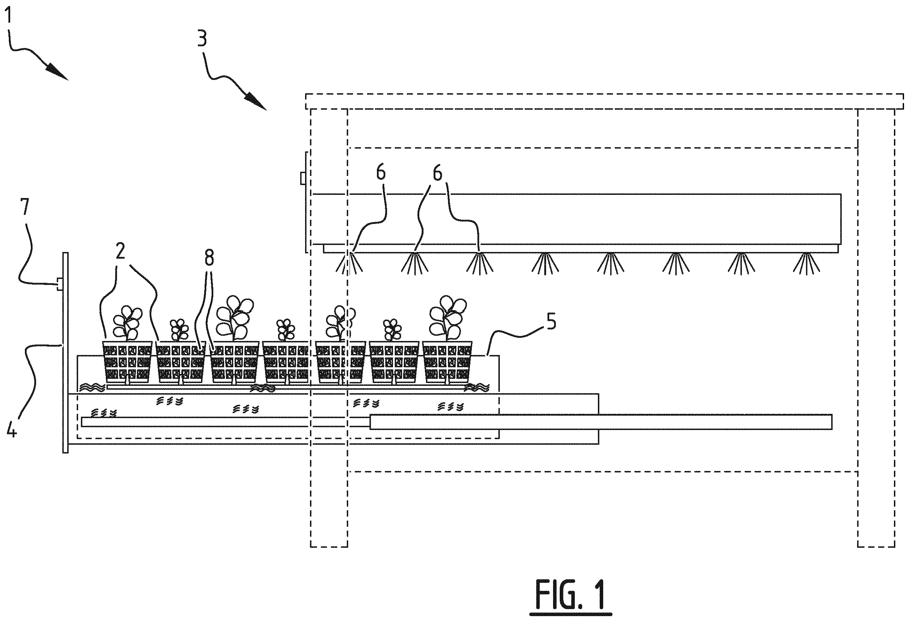

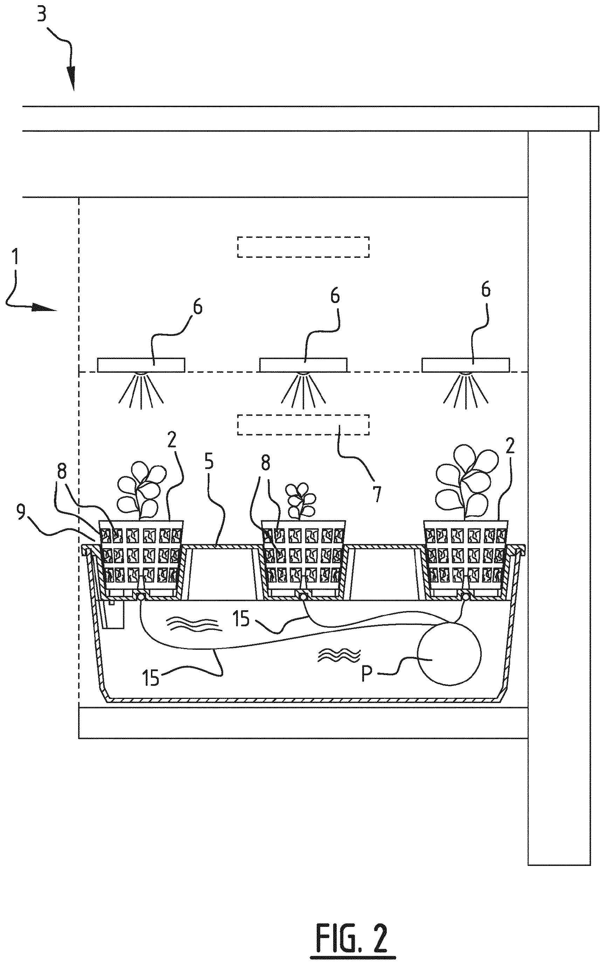

Referring now to figure 1 and figure 2, a system 1 for growing plants in accordance with the present invention comprises a plurality of plant pots 2. Each plant pot 2 comprises a capillary growth medium suitable for plant growth and formation of roots with the planted rooted therein.

The system 1 for growing plants is installed in a cabinet 3, which may be a kitchen cabinet with an extendable drawer 4 with a grip 7. The extendable drawer 4 may thus be opened for providing access to plants pots 2 for inspection and/or harvesting of plant material.

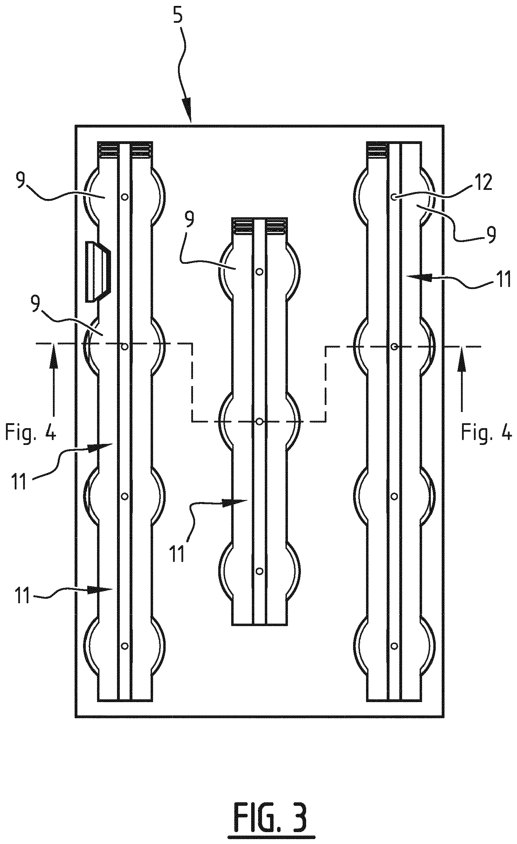

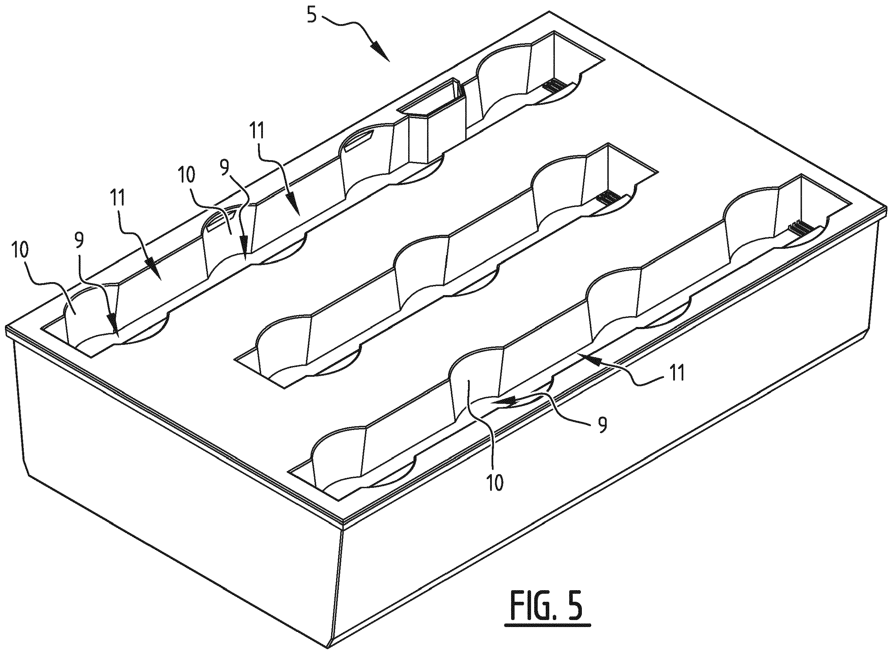

The plant pots 2 are arranged in a holder 5 comprising a plurality of accommodations 9 for each of plant pots 2. Holder 5 will be elucidated below with reference to figure 3 and figure 5.

The system 1 moreover comprises a plurality of light sources 6 arranged above plant pots 2. Each light source 6 is configured to emit light with a wavelength and intensity suitable for a given plant to perform photosynthesis. LED light sources and incandescence light sources suitable for this purpose are known in the art. In the depicted embodiment, light sources 6 are mounted on an interior upper surface of the cabinet 3.

As is best illustrated in figure 2, each plant pot 2 comprises a side wall with a plurality of perforations 8 exposing the capillary growth medium contained therein. Each perforation 8 is dimensioned sufficiently large to allow for aeration of the capillary growth medium, yet sufficiently small relative to a particle size of capillary growth medium to ensure said capillary growth medium is at all times contained within plant pot 2.

The perforations 8 disposed in the side wall of plant pot 2 advantageously allow for ambient gasses, in particular oxygen, to penetrate the capillary growth medium where it may be absorbed by a plant planted in plant pot 2. Absorption of oxygen is required for plant growth, in particular when light sources 6 are switched off and no photosynthesis occurs. Consequently, perforations 8 contribute to creating an improved growing environment for plants planted in plant pots 2.

Moreover, aeration of the capillary growth medium by means of perforations 8 advantageously allows for any excess water present in said capillary growth medium to be dissipated through evaporation. Advantageously, the formation of mold or mildew within the capillary growth is reduced or even entirely eliminated due to the improved microclimate in plant pots 2, thereby reducing a risk of the plants being affected by said mold and increasing the overall hygiene of system 1. In addition, the dissipation of excess water through perforations 8 prevents water from splashing or leaking out of plant pots 2 when the system 1, including holder 5 and plant pots 2, are displaced in a relatively abrupt or sudden fashion. Such a displacement of system 1 may occur when the drawer 4 is opened or closed for inspection and/or harvesting of plants contained within the system 1.

It is noted here that that in the present disclosure the term "excess water" generally refers to water that is present within the capillary growth medium, but not necessarily contained within the tubular structure of this capillary growth medium. Capillary growth medium comprising excess water should therefore be understood as being growth medium that is saturated with water, with said water essentially forming a water column within a given plant pot 2. Such excess water is considered to promote the growth of mold and may easily spread toward unwanted places during use of the system 1 for growing plants.

It is furthermore noted that figure 1 and figure 2 are not necessarily drawn to scale. In particular the intermediate distance between each of the plant pots 2 may be larger than what is suggested by these figures and the number of plants pots arranged in a lengthwise direction of drawer 4 may differ. In a practical embodiment of the system 1 this number of plants arranged in a lengthwise direction of drawer 4 may be four.

Moreover, the plant pots 2 may comprise a height of approximately 7 cm of which 4 cm may extend above holder 5. While the present disclosure is not limited to these dimensions, a relatively larger portion of the height of plant pot (e.g. half of said height or more) extending above holder 5 is generally considered advantageous because such embodiments optimise aeration of the growth medium by means of perforations 8.

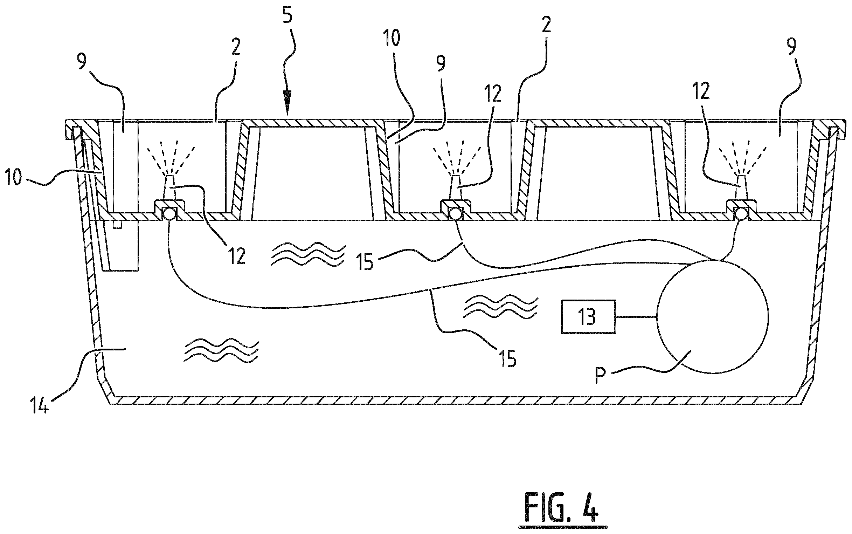

Referring now to figures 3, 4 and 5, the holder 5 comprises a plurality of accommodations 9. Each accommodation 9 comprises a circular shape dimensioned and configured to receive a respective plant pot 2. As is best illustrated in figures 4 and 5, each accommodation 9 is embodied as a recess in a top surface of holder 5 including accommodation wall 10. Alternatively, in a non-depicted embodiment accommodations 9 may be embodied by a accommodation wall or side wall protruding from the top surface of holder 5.

Each accommodation wall 10 extends around at least part of a circumference of a lower section of each plant pot 2. Moreover, accommodation wall 10 of accommodation 9 is preferably dimensioned relative to plant pot 2 so that at least some of the perforations 8 of plant pot 2 are arranged above the accommodation wall 10 and at a higher section of plant pot 2.

As is best illustrated in figures 3 and 5, holder 5 comprises a total of eleven accommodations 9 that are arranged in three distinct columns, although the present disclosure is not limited thereto and other numbers of accommodations 9 may be employed, that may moreover arranged in alternative numbers of columns. As indicated by the arrows in figure 3, neighbouring rows of accommodations 9 are vertically offset relative to one another to achieve an optimally dense distribution of accommodations 9 over the top surface area of holder 5.

Moreover, there is arranged an opening or recess 11 in the accommodation walls 10 of neighbouring accommodations 9 in a vertical direction of holder 5. Collectively, these recesses 11 collectively constitute an aeration channel extending along the plant pots 2 and contributing to an improved aeration of the perforations 8 in the side walls of plant pots 2, in particular those perforations 8 situated at a lower sections of plant pots 2 and lower than an upper level than accommodation walls 10.

As indicated by figure 4, holder 5 moreover comprises a plurality of nozzles 12 configured to moisturise respective lower sections of plant pots 2. Each nozzle 12 is associated with a corresponding accommodation 9 and arranged at or near a lower end thereof, from which said nozzle 12 protrudes upwards towards and into a corresponding plant pot 2.

Each of plant pots 2 may comprise an opening in a bottom thereof wherein a corresponding nozzle 12 is to be inserted or through which water ejected by said nozzle 12 may flow.

The moisturisation of respective lower sections of plant pots 2 by means of nozzles 12 may include any form of spraying - or even merely dripping - of water into said respective lower sections. Once introduced into the lower section of a given plant pot 2, water or moisture disperses towards higher sections of said plant 2 on account of a capillary action of the capillary growth medium contained in each plant pot 2. Consequently, the amount of water required for watering a plant planted in a given plant pot 2 is minimised and each of nozzles 12 may be constructed in a simple and cost efficient fashion. Moreover, because said water/moisture is contained largely within a tubular structure of the capillary growth medium, an amount of excess water not contained within this tubular structure is likewise minimised and the formation of a water column within a given plant pot 2 is largely prevented. As such, there exists only little risk of splashing and/or slushing of water when holder 5 and plant pots 2 are displaced in a sudden fashion, which may occur when drawer 4 of figure 1 opened to gain access to system 1, even shortly after watering. Relatively small amounts of excess water that are nevertheless present may quickly and easily evaporate due to the presence of perforations 8 as described above.

In the depicted embodiments, each nozzle 12 is fluidly connected to a pump P by means of a fluid conduit 15. Pump P is configured to pump water from a water supply 14 towards nozzles 12 through fluid conduits 15. Moreover, because the distribution of moisture throughout the capillary growth medium at least partially occurs through capillary action, pump P only requires very little power. As such, pump P may be constructed relatively simple and therefore reliable and cost efficient.

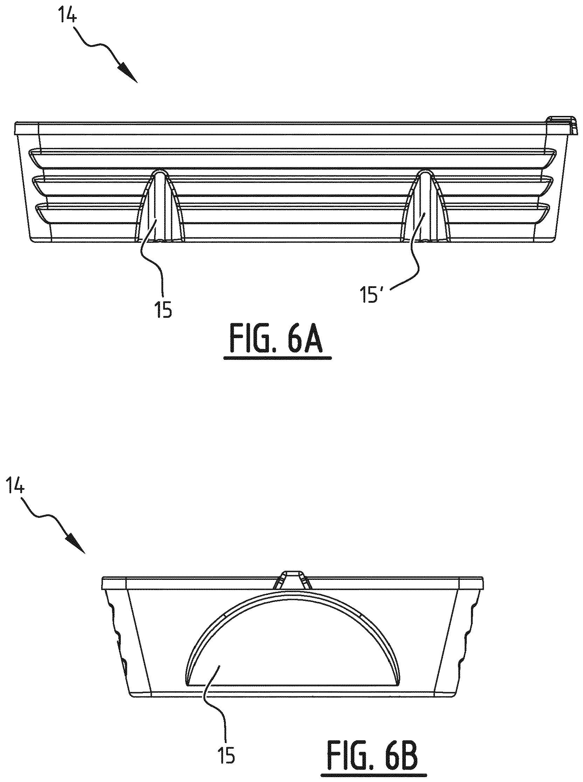

In the depicted embodiment, water supply 14 is a reservoir that is preferably closed to prevent leaking of fluid due to splashing or slushing when holder 5 is displaced. The water supply 14 will be elucidated further below with reference to figures 6A and 6B. In alternative embodiments, water supply 14 may be embodied by a water mains (not shown).

While the reservoir embodying the water supply 14 is elucidated here above as a means of supplying water, the present disclosure is not limited thereto. Alternatively or additionally, the container or reservoir embodying the water supply 14 may moreover function as a drip tray configured to collect any excess water dissipated from the plant pots 2. It is moreover conceived that two containers are comprises by the system 1, with a first container acting as the water supply as described here above and a second container acting as a drip tray.

In accordance with certain embodiments, nozzle 12 and/or pump P may be configured to periodically moisturise the lower section of plant pot 2 in an automated fashion, without requiring user intervention. Moisturising the lower section of plant pot 2 for one minute every hour has been experimentally determined to adequately meet the watering requirements of most plants. In these embodiments, a controller 13 may be provided for controlling a periodic operation of pump P. In addition to moisturising on a periodic basis, more sophisticated watering schemes are likewise conceived. For example, watering may be based on a measured humidity of the capillary growth medium, an ambient temperature, a humidity of ambient air, or a combination of these criteria. Such embodiments of system 1 may moreover comprise at least one sensor (not shown) for measuring at least one of the capillary growth medium humidity, air humidity or ambient temperature; and be configured to control watering based on a measurement result of this sensor.

Within the context of the present disclosure, the nozzle 12 may alternatively be referred to as a (micro drip) sprayer.

Referring now to figures 6A and 6B, the water supply 14 may be embodied by a fluid container 14, alternatively referred to as a fluid reservoir 14 or water supply 14, disposed underneath holder 5 with holder 5 arranged thereon in a lid-like manner. A seam between the edges of fluid container 14 and holder 5 is preferably substantially watertight, for example by means of an appropriately disposed rubber or silicone material. As such, leaking or splashing of fluid out of fluid container 14 may be prevented to at least some degree, in particular when drawer 4 is abruptly opened or closed any fluid present within the interior of fluid container 14 is inclined to form waves and potentially splash due to the inertia of the fluid.

In addition or alternatively, the interior of the fluid container may 14 comprise a number of bulkheads or wave breakers 15, 15'. In the depicted embodiment of system 1, two wave breakers 15 and 15' are disposed at approximately equal distance to a centerline (not shown) of fluid container 14; each wave breaker 15, 15'comprising an approximately half-circular shape extending from a bottom of the fluid container 14.

In the event that the drawer 4 as depicted in figure 1 is opened or closed in an abrupt manner, the fluid contained within fluid container 14 will collide with wave breakers 15 and 15' as a result of its inertia with wave breakers 15 and 15' thereby breaking up any relatively large waves that may result from the sudden movement of drawer 4 having therein the system 1 with fluid container 14. The resultant smaller waves are then significantly less likely to splash and potentially leak out of fluid container 14. In other words, the wave breakers 15, 15' prevent fluid splashing out of fluid container 14 by transferring the moment of the fluid container to the fluid contained within fluid container 14.

While the embodiment of system 1 of figures 6A and 6B comprises two half-circular partioners 15 and 15', the present disclosure is not limited thereto. Alternatively one, three or an even greater number of wave breakers may be disposed within fluid container 14. Moreover, these wave breakers may comprise alternative shapes, for example square.

In embodiments of the system 1 comprising a drip tray distinct from the above described fluid container or water supply 14, this drip tray may likewise comprise one or more wave breakers 15, 15'.

Fluid container 14 may moreover comprise a drain (not shown) to drain water from fluid container 14.

In preferred embodiments of the system 1 for growing plants, the capillary growth medium is an acidic growth medium, which promotes optimal plant growth and development, in particular when water with a high mineral content is used and/or when plants requiring acidic soil are grown.

The combination of an acidic growth medium in conjunction with supplying oxygen to any roots within this growth medium by means of the here above described perforations 8 has been found to result in an exceptionally increased plant growth. In experiments performed by the applicant, a major root was removed from a plant. While this operation is normally expected to result in a dying off of the plant, it was found that placing this plant in the system 1 according to the present invention comprising both perforations 8 in the at least one plant pot 2 having therein an acidic growth medium resulted in sustained growth of the plant.

In further preferred embodiments of the system 1 for growing plants, the capillary growth medium comprises peat moss (spagnum) or a material exhibiting comparable properties. Peat moss is considered as advantageous due to it being a low cost material with a small environmental impact, that is moreover easily obtainable on the open market.

In preferred embodiments of the system 1 in accordance with the present invention, the system 1 is configured for indoor or domestic usage. In particular, the system 1 is dimensioned and/or configured to fit into an enclosure such as a kitchen cabinet. It is emphasised here that the scope of protection for the developments described in the present disclosure are by no means limited to any particular feature of the embodiments described above and illustrated in the appended drawing. In particular, although the system is elucidated on the basis of a domestic system for personal use, the skilled person will recognise that the same principles may be scaled for industrial use, e.g. for vertical farming. The scope of protection is exclusively determined based on the limitations of the appended independent claims, but may, in some jurisdictions, even encompass obvious alternatives for features in the independent claims. Other variations for specifically described elements, components and functionalities, that may also be embodied within the scope of the appended claims of the present disclosure, have been at least hinted at in the above embodiment description or the skilled person may be considered to be able to contemplate these variations within the range of this skilled person's general knowledge. This exemplary reference to alternative embodiments substantiates that any limitation to any specific feature, that is not defined as a limitation in the independent claims, is unwarranted.

## Claims

1. System for growing plants, comprising:
- a plant pot comprising a capillary growth medium and a side wall having perforations; and
- a holder, comprising:
- an accommodation configured to receive the plant pot; and
- a nozzle arranged at or near a lower end of the accommodation and configured to moisturise a lower section of the plant pot, so that water or moisture is allowed to disperse towards higher sections of said plant pot by means of a capillary action of the capillary growth medium comprised by the plant pot.

2. System according to claim 1, wherein the holder comprises one or more than one further accommodation configured to receive one or more than one further plant pot.

3. System according to any one of the foregoing claims, wherein the accommodation comprises a accommodation wall extending around at least part of a circumference of the lower section of the plant pot.

4. System according to claim 3, wherein at least some of the perforations of the plant pot are arranged above the accommodation wall of the accommodation.

5. System according to at least claims 2 and 3, wherein each accommodation wall comprises at least one recess.

6. System according to claim 5, wherein the recess is oriented towards an accommodation of an adjacent plant pot, thereby providing an aeration channel that is in contact with the plant pot.

7. System according to any one of the foregoing claims, wherein the capillary growth medium is an acidic growth medium.

8. System according to claim 7, wherein the acidic growth medium comprises peat moss.

9. System according to any one of the foregoing claims, further comprising a drip tray configured to collect any excess water dissipated from the plant pot.

10. System according to any one of the foregoing claims, further comprising a water supply fluidly connected to the nozzle.

11. System according to claim 10, wherein the water supply is a fluid container comprised by the system.

12. System according to claim 11, wherein the fluid container comprises at least one wave breaker.

13. System according to any one of the foregoing claims, wherein the system moreover comprises a pump fluidly connected with the nozzle.

14. System according to any one of the foregoing claims, wherein the system is configured to periodically moisturise the lower section of the plant pot, preferably for one minute per hour.

15. System according to any one of the foregoing claims, wherein the system is an indoor system for growing plants, the system preferably moreover being dimensioned to fit into a kitchen cabinet or kitchen drawer.

16. Holder of or for a system according to any one of foregoing claims 1 - 15.

17. Plant pot of or for a system according to any one of the foregoing claims 1 - 15.
